# EUROPÄISCHE PATENTSCHRIFT

(11) **EP 3 334 246 B1**
(45) Veröffentlichungstag und Bekanntmachung des Hinweises auf die Patenterteilung: **08.01.2020**
(21) Anmeldenummer: 17155418.1
(22) Anmeldetag: 09.02.2017
(51) Int. Cl.: H05B 3/24, B60H 1/22, F24H 3/04, F24H 9/18, H05B 1/02, F24H 1/10, F24H 1/00, F24H 1/12, F24H 9/20, H05B 3/02, H05B 3/04, H05B 3/06, H05B 3/14

(54) **ELEKTRISCHE HEIZVORRICHTUNG**
ELECTRIC HEATING DEVICE
DISPOSITIF DE CHAUFFAGE ÉLECTRIQUE

(30) Priorität: 06.12.2016 DE 102016224296
(43) Veröffentlichungstag der Anmeldung: 13.06.2018
(73) Patentinhaber: Eberspächer catem GmbH & Co. KG, 76863 Herxheim (DE)
(72) Erfinder: Bohlender, Franz, 76870 Kandel (DE); Schwarzer, Andreas, 60433 Frankfurt am Main (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 1 768 458
- EP-A2- 0 026 457
- EP-A2- 2 547 171

## Beschreibung

Die vorliegende Erfindung betrifft ein PTC-Heizelement nach dem Oberbegriff von Anspruch 1. Ein solches PTC-Heizelement ist aus der EP 1 768 458 A1 bekannt.

Ein solches PTC-Heizelement ist beispielsweise auch aus der EP 2 607 121 A1 bekannt. Bei diesem vorbekannten PTC-Heizelement handelt es sich um das PTC-Heizelement eines Luftheizers. In einem das Heizelementgehäuse ausbildenden Positionsrahmen sind mehrere PTC-Elemente aufgenommen, die an gegenüberliegenden Hauptseitenflächen mit einem Kontaktblech kontaktiert sind, welche mit dem Positionsrahmen verrastet sind. An einer Stirnseite wird das Heizelementgehäuse von Anschlussstutzen überragt, die einteilig an dem Heizelementgehäuse angeformt sind und über welche Dichtungshülsen aus Teflon mit einer an der Außenumfangsfläche vorgesehenen Labyrinthdichtung gezogen sind. An der den PTC-Elementen abgewandten Außenseite der Kontaktbleche sind jeweils Isolierlagen aufgebracht, die aus einer Kunststofffolie gebildet sind.

Aus der EP 1 253 808 A1 bzw. EP 1 395 098 A1 sind ähnliche PTC-Heizelemente bekannt. Bei diesem Stand der Technik wird zumindest einseitig das Kontaktblech zusammen mit der Isolierlage bei der Herstellung des Heizelementgehäuses umspritzt, so dass lediglich die PTC-Elemente in die Öffnung des rahmenförmigen Heizelementgehäuses eingelegt und an der gegenüberliegenden Seite mit dem Kontaktblech und der Isolierung zu überdecken sind.

Eine solche Ausgestaltung stellt zwar gegenüber dem zuvor beschriebenen Stand der Technik eine fertigungstechnische Vereinfachung dar. Der Aufbau ist aber weiterhin relativ raumgreifend und aufwändig. Die vorliegende Erfindung will ein PTC-Element insbesondere für die Kraftfahrzeugindustrie angeben. In Kraftfahrzeugen, insbesondere im Bereich der Elektromobilität, kommen verstärkt PTC-Heizelemente zum Einsatz. Diese müssen sich kostengünstig herstellen lassen und möglichst leicht sein. Des Weiteren ist eine gute Wärmeauskopplung der von dem PTC-Element erzeugten Wärme gewünscht, da die PTC-Elemente selbstregelnde Eigenschaften haben und nur mit schlechtem Wirkungsgrad betrieben werden können, wenn die von dem PTC-Element erzeugte Wärme nur unzureichend abgeführt wird.

Mit Blick darauf schlägt die vorliegende Erfindung vor, dass der Kunststoffrahmen (134) stoff- und/oder formschlüssig mit der Isolationslage (124) und dem wenigstens einen PTC-Element (120) zwischen den beiden Isolationslagen (124) verbunden ist.

Der Kunststoffrahmen nach der vorliegenden Erfindung umrandet die Isolationslage und bevorzugt einen sehr schmalen Randbereich des PTC-Elementes, deckt aber das PTC-Element nicht vollständig ab. Hinter den durch den Kunststoffrahmen definierten Rahmenöffnungen liegen die Hauptseitenflächen des PTC-Elementes. Es versteht sich, dass das PTC-Element vorliegend an seinen Hauptseitenflächen ganz oder überwiegend, regelmäßig das PTC-Element allseitig überragend von der Isolationslage überdeckt wird.

Das erfindungsgemäße PTC-Heizelement kann auf konventionelle Weise bestromt werden. Dabei liegen an den sich gegenüber liegenden Hauptseitenflächen des PTC-Elementes Blechstreifen auf, die bevorzugt einteilig die Kontaktzungen der elektrischen Steckverbindung ausbilden. Diese Kontaktbleche können ganz oder teilweise die Hauptseitenfläche des PTC-Elementes abdecken. An der der Hauptseitenfläche des PTC-Elementes gegenüberliegenden Seite liegt in der Regel die Isolationslage unmittel an dem Kontaktblech an.

Der spritzgegossene Positionsrahmen wird durch Umspritzen der Isolationsplatten mit dem PTC-Element zwischen den Isolationsplatten angeordnet hergestellt. Der Kunststoffrahmen ist bevorzugt als einteiliges Bauteil ausgebildet. Der Kunststoffrahmen definiert bevorzugt die Außenumfangsfläche des PTC-Heizelementes, welche lediglich an einer vorbestimmten Seite durch die beiden Kontaktzungen überragt. Diese Seite ist die Anschlussseite des PTC-Heizelementes zum Anschluss an eine Steuer- oder Anschlussplatine. An dieser Seite kann der Kunststoffrahmen durch das Rahmenmaterial selbst ein Steckelement, bevorzugt das männliche Steckelement einer Steckverbindung ausbilden. Das Steckelement ist dabei so ausgebildet, dass das PTC-Element mechanisch in einer Steckelementaufnahme befestigt werden kann, d.h. die Befestigung des PTC-Elementes auch in Einsteckrichtung allein durch die Ausgestaltung des Heizelementgehäuses bewirkt wird. So kann das PTC-Element allein aufgrund der Steckverbindung in einer Halterung der Steckverbindung, beispielsweise einer Trennwand, die eine Zirkulationskammer von einer Anschlusskammer trennt, gehalten sein. Der Kunststoffrahmen kann aus Silikon gebildet sein.

Um diese Steckverbindung möglichst auch fluiddicht auszubilden und auch im Hinblick auf eine gute Abdichtung und Einsiegelung des PTC-Elementes innerhalb des Heizelementgehäuses wird gemäß einer bevorzugten Weiterbildung der vorliegenden Erfindung der Kunststoffrahmen aus einem elastomeren Kunststoff gebildet. Bei diesem Kunststoff handelt es sich bevorzugt nicht um einen TPE, sondern um einen vernetzenden Elastomer. Aufgrund der Elastizität des elastomeren Kunststoffs kann die Steckverbindung so ausgebildet werden, dass sich gute Haltekräfte ergeben und des Weiteren eine solide beispielsweise flüssigkeitsdichte Abdichtung im Bereich der Steckverbindung erzeugt wird.

Bei der erfindungsgemäßen Lösung liegt die Isolierlage bevorzugt unmittelbar an dem PTC-Element an oder ist unmittelbar darauf beispielsweise als Beschichtung aufgebracht. Gegenüber dem vorbekannten Stand der Technik gemäß EP 2 607 121 A1 erfolgt dementsprechend die elektrische Versorgung des PTC-Elementes hauptsächlich oder überwiegend über die Stirnseite, d.h. über einander gegenüberliegende Ränder des PTC-Elementes, die sich üblicherweise rechtwinklig zu der Haupterstreckungsrichtung der Isolationsplatte erstrecken.

Das erfindungsgemäße PTC-Heizelement ist in der Regel ein eigenständiges und mit einer Trennwand einer Heizvorrichtung zu verbindendes Element. Der Kunststoffrahmen bildet regelmäßig das elleinige und einzige Gehäuse des PTC-Heizelementes aus, das allein von den Steckverbindungen überragt ist. Jenseits dessen gibt der Kunststoffrahmen in der Regel die äußeren Abmessungen des erfindungsgemäßen PTC-Heizelementes vor.

Erfindungsgemäß liegen die Isolierlagen in gegenüberliegenden Rahmenöffnungen frei, d.h. bilden zusammen mit dem Material des Kunststoffrahmens die Außenfläche des PTC-Heizelementes. Die beiden Hauptseitenflächen des zumindest einen PTC-Elementes innerhalb des Heizelementgehäuses sind mit diesen Isolationsplatten abgedeckt und liegen bevorzugt unmittelbar daran an.

Die Isolierlagen können aus einer ein- oder mehrschichtigen Isolierplatte gebildet sein, die im Wesentlichen die gesamte Hauptseitenfläche des PTC-Elementes abdeckt, diese regelmäßig überdeckt, d.h. zumindest einseitig, bevorzugt mehrseitig und besonders bevorzugt vollumfänglich das PTC-Element überragt. Die Isolierlage kann beispielsweise durch eine Kombination einer Keramikplatte mit einer Kunststoffplatte gebildet sein. Die Isolierlage kann aber auch beispielsweise durch Beschichten des PCT-Elementes mit einem elektrisch isolierenden Material ausgebildet sein. In diesem Fall bildet das PTC-Element das Substrat aus, und die Außenfläche der Isolierlage liegt üblicherweise innerhalb des Kunststoffrahmens frei, so dass sich ein guter Wärmeaustrag der von dem PCT-Element erzeugten Wärme ergibt. Als Beschichtung kommt beispielsweise eine keramische Beschichtung in Frage, die mittels PVD oder CVD auf dem PTC-Element als Subtrat aufgebracht ist. Eine als isolierende Beschichtung auf die Hauptseitenfläche des PTC-Elementes aufgebrachte Isolierlage kann mit einer Isolierplatte aus Keramik und/oder Kunststoff kombiniert werden.

Die Bestromung des zumindest einen PTC-Elementes erfolgt in an sich bekannter Weise bevorzugt über einen Blechstreifen. Dieser bildet als einteiliges Bauteil sowohl die Kontaktzunge, als auch die elektrisch mit dem PTC-Element verbundene Elektrode aus. Diese Elektrode ist regelmäßig nicht die durch PVD oder CVD auf der Oberfläche des PTC-Elements aufgebrachte und daran anhaftende Metallisierung. Diese ist Teil des PTC-Elementes. Zur Kontaktierung hat der Blechstreifen einen elektrisch leitenden und an dem PTC-Element anliegenden Kontaktsteg, der üblicherweise in Längserstreckungsrichtung des Kontaktsteges durch die Kontaktzunge verlängert ist, die das Heizelementgehäuse außenseitig überragt. Alle übrigen Teile des PTC-Elementes sind durch Umspritzen des Kunststoffs entweder eingesiegelt oder innerhalb der Rahmenöffnung vorgesehen.

Zur Herstellung des PTC-Elementes nach der vorliegenden Erfindung wird bevorzugt an gegenüberliegenden Randflächen der Blechstreifen elektrisch leitend mit dem PTC-Element verklebt. Es können auch mehrere PTC-Elemente mit dem Blechstreifen auf diese Weise verklebt sein. Die PTC-Elemente können mit Abstand zueinander vorgesehen sein, um im mittleren Bereich des PTC-Heizelementes eine Überhitzung zu vermeiden. Der Blechstreifen hat aber zumindest im Bereich des Steges eine etwas geringere Dicke als das PTC-Element. In dieser Weise vorbereitet, wird an gegenüberliegenden Hauptseitenflächen des oder der PTC-Elemente eine Isolationsplatte aufgelegt.

Die Isolationslage ist oder umfasst bevorzugt eine Isolationsplatte, beispielsweise eine Keramikplatte, da diese eine relativ gute Wärmeleitfähigkeit hat. Die Isolationsplatte wird bevorzugt so aufgelegt, dass diese das oder die PTC-Elemente über den gesamten Umfang überragt und an denjenigen Stellen, wo sich der Blechstreifen befindet, diesen teilweise überdeckt. Die Isolationsplatte kann mit dem Blechstreifen und/oder dem PTC-Element durch Kleben verbunden bzw. vorläufig daran fixiert werden. Die so vorbereitete Einheit wird in eine Spritzgießform gegeben, in deren Formnest die Hauptseitenflächen der Isolationsplatte im Wesentlichen zwischen den Werkzeughälften geklemmt werden. Lediglich ein Randbereich zur Ausbildung des Kunststoffrahmens bleibt umfänglich um das PTC-Element und den Blechstreifen als umlaufender Ringkanal frei. In diesen Ringkanal wird danach Kunststoff, bevorzugt elastomerer Kunststoff eingespritzt, der vernetzt und damit aushärtet bzw. abbbindet. Nachdem eine hinreichende Formsteifigkeit des Kunststoffs erreicht ist, wird das fertige Erzeugnis aus der Spritzgießform entformt. Für das schonende Abdichten der Hauptseitenflächen der Isolierplatte kann die Spritzgussform in geschlossenem Zustand mit der Isolierplatte zusammenwirkende Flächen aufweisen die aus einem weichen, bevorzugt weichelastischen Material gebildet sind, beispielsweise einem Duroplasten. Das Spritzgießen des den Kunststoffrahmen ausbildenden Materials erfolgt bei relativ geringen Drücken.

Gemäß einer bevorzugten Weiterbildung der vorliegenden Erfindung ist der Kunststoffrahmen an seiner Außenseite mit einem verjüngten Anlagesteg versehen. Dieser Anlagesteg ist in Dickenrichtung des Kunststoffrahmens verjüngt ausgebildet. Der Anlagesteg ist üblicherweise zumindest an einem Rahmenholm des Kunststoffrahmens vorgesehen. Besonders bevorzugt ist der Anlagesteg an drei aufeinander folgenden Außenseiten bzw. Rahmenholmen des Kunststoffrahmens vorgesehen. An der den Kontaktflächen gegenüber liegenden Seite des Kunststoffrahmens bildet der unterseitige Anlagesteg eine Abdichtung gegenüber dem Boden eines Heizergehäuses. Die sich dazu rechtwinklig ersteckenden randseitigen Anlagestege dienen der Abdichtung gegenüber einer seitlichen Wand des Heizergehäuses. So können die PTC-Elemente alternierend versetzt vorgesehen sein, so dass jedes erste PTC-Heizelement an einer, beispielsweise linken Seite an dem Heizergehäuse anliegt, wohingegen jedes zweite PTC-Heizelement an der gegenüberliegenden, rechten Gehäusewand anliegt. Hierdurch wird auf einfache Weise an mäandrierender Strömungskanal gebildet. Die randseitigen Anlagestege dichten das PTC-Heizelement gegenüber dem Heizergehäuse ab. Der Anlagesteg ist bevorzugt einteilig ausgeformt, d.h. integraler Bestandteil des spritzgegossenen Kunststoffrahmens. Insbesondere der untere Anlagesteg kann auch als Kompressionselement genutzt werden, um nach Einbau des erfindungsgemäßen PTC-Heizelementes in das Heizergehäuse eine bestimmte Einbaulage durch elastische Vorspannkraft zu sichern. Diese Sicherung kann eine mechanische Sicherung sein, um das PTC-Heizelement mechanisch an dem Heizergehäuse festzulegen. Die Vorspannkraft kann aber auch oder ergänzend für eine zuverlässige Kontaktierung der Kontaktzungen durch Vorspannung des PTC-Heizelementes sorgen.

Die vorliegende Erfindung bietet die Möglichkeit, ein PTC-Heizelement wirtschaftlich herzustellen, indem die Kontaktzungen zusammen mit den Elektroden und dem wenigstens einen PTC-Element vormontiert und abgedeckt von Isolationsplatten an gegenüberliegenden Hauptseitenflächen des PTC-Elementes in eine Spritzgießform eingesetzt werden, in welcher der Kunststoffrahmen ausgebildet wird. Dieser wird bevorzugt durch ein Elastomer gebildet, so dass der Kunststoffrahmen auch Dichtmittel für eine Steckverbindung ausbilden kann, deren bevorzugt männliches Steckelement durch das PTC-Heizelement selber gebildet wird. Der elastomere Kunststoff hat ferner den Vorteil, dass der Kunststoffrahmen die Isolationsplatte und gegebenenfalls die Blechstreifen zur Bestromung des bzw. der PTC-Elemente dauerelastisch einsiegelt. Da die Isolationsplatte bevorzugt unmitttelbar an dem PTC-Element anliegt und dementsprechend die Bestromung des PTC-Elementes stirnseitig erfolgt, wird die von dem PTC-Element erzeugte Wärme bestmöglich ausgekoppelt. Das PTC-Heizelement ist leicht. Es lässt sich wirtschaftlich herstellen.

Das PTC-Heizelement der vorliegenden Erfindung ist insbesondere ein PTC-Heizelement für einen Wasserheizer, wie er beispielsweise aus der EP 2 797 381 A1 bekannt ist und der eine Zirkulationskammer aufweist, die fluiddicht insbesondere wasserdicht ausgebildet ist und in der zu erwärmende Flüssigkeit zirkulieren kann, die über eine Trennwand von einer Anschlusskammer getrennt ist, in welcher die Kontaktzungen des PTC-Heizelementes freiliegen. Bevorzugt sind mehrere PTC-Heizelemente als Teil dieser elektrischen Heizvorrichtung vorgesehen. Durch die Wahl von elastomerem Kunststoff zur Ausbildung des Kunststoffrahmens kann das erfindungsgemäße PTC-Heizelement in die Trennwand eingesteckt werden, um die Kontaktzungen in der Anschlusskammer anzuordnen und die Zirkulationskammer aufgrund der Steckverbindung gegenüber der Anschlusskammer abzudichten. Die Steckverbindung erlaubt auch eine Halterung des PTC-Heizelementes in Einsteckrichtung, so dass die Trennwand zunächst mit sämtlichen PTC-Heizelementen bestückt werden kann, um die so vormontierte Einheit zu handhaben und schließlich das Heizergehäuse unter Einschluss des bzw. der PTC-Heizelemente zu schließen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Draufsicht auf ein erstes Ausführungsbeispiel eines Gehäuses;
- Figur 2: eine perspektivische Seitenansicht des in Figur 1 gezeigten Ausführungsbeispiels;
- Figur 3: eine in dem ersten Ausführungsbeispiel vorgesehene Abdeckplatte 22 in isolierter Darstellung zusammen mit PTC-Heizelementen;
- Figur 4: die in Figur 3 gezeigte Abdeckplatte beim Bestücken mit einem PTC-Heizelement;
- Figur 5: eine seitliche perspektivische Schnittansicht eines zweiten Ausführungsbeispiels der vorliegenden Erfindung;
- Figur 6: das Detail VI gemäß der Darstellung in Figur 5;
- Figur 7: eine perspektivische Sicht in die Steuerwanne des zweiten Ausführungsbeispiels;
- Figur 8: eine perspektivische Längsschnittansicht entlang der Linie VIII-VIII gemäß der Darstellung in Figur 7;
- Figur 9: eine perspektivische, teilweise aufgebrochene Seitenansicht des zweiten Ausführungsbeispiels mit einer an dem Kunststoffgehäuse vorgesehenen Abschirmung;
- Figur 10: eine perspektivische Seitenansicht von Teilen des PTC-Heizelementes;
- Figur 11: eine teilweise gebrochene perspektivische Seitenansicht des PTC-Heizelementes;
- Figur 12: eine perspektivische Querschnittsansicht des PTC-Heizelementes;
- Figur 13: eine Längsschnittansicht durch die Abdeckplatte gemäß den Figuren 3, 4 mit einem einzelnen darin aufgenommenen PTC-Heizelement;
- Figur 14: eine perspektivische Seitenansicht bei entfernten Gehäusedeckel eines weiteren Ausführungsbeispiels;
- Figur 15: eine Ansicht ähnlich zu Figur 14 ohne Gehäusedeckel des weiteren Ausführungsbeispiels und
- Figur 16: eine perspektivische Schnittansicht durch die Trennwand des weiteren Ausführungsbeispiels.

### 1. Grundsätzlicher Aufbau der Heizvorrichtung

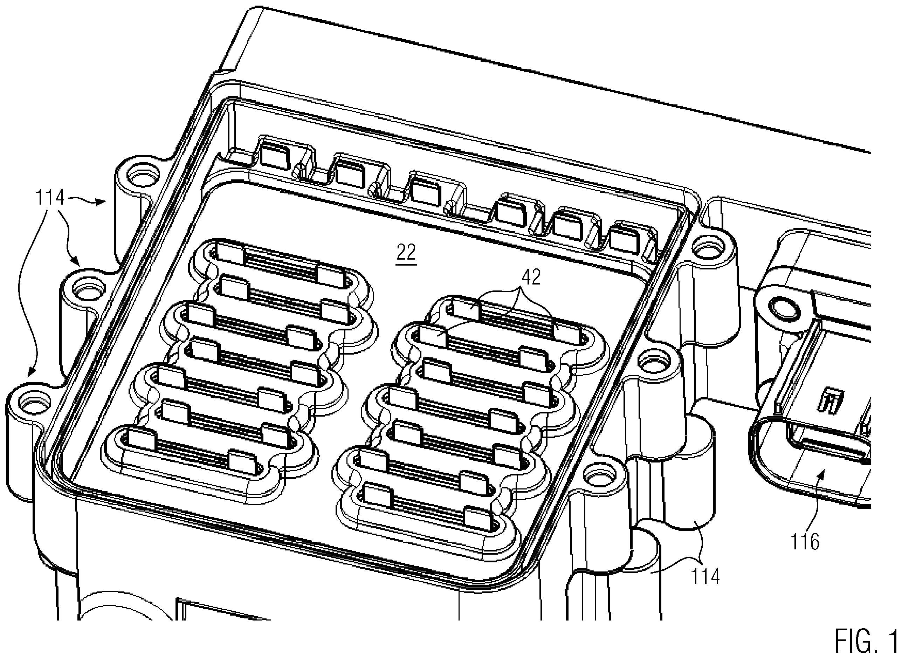

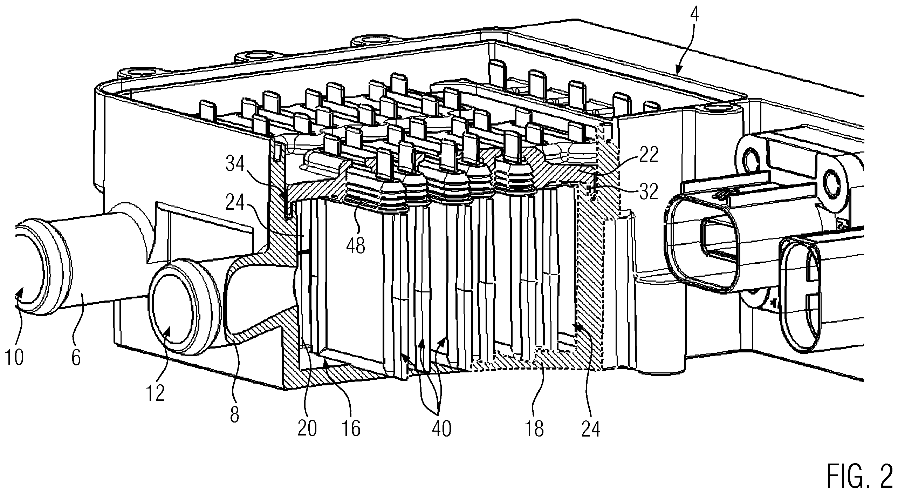

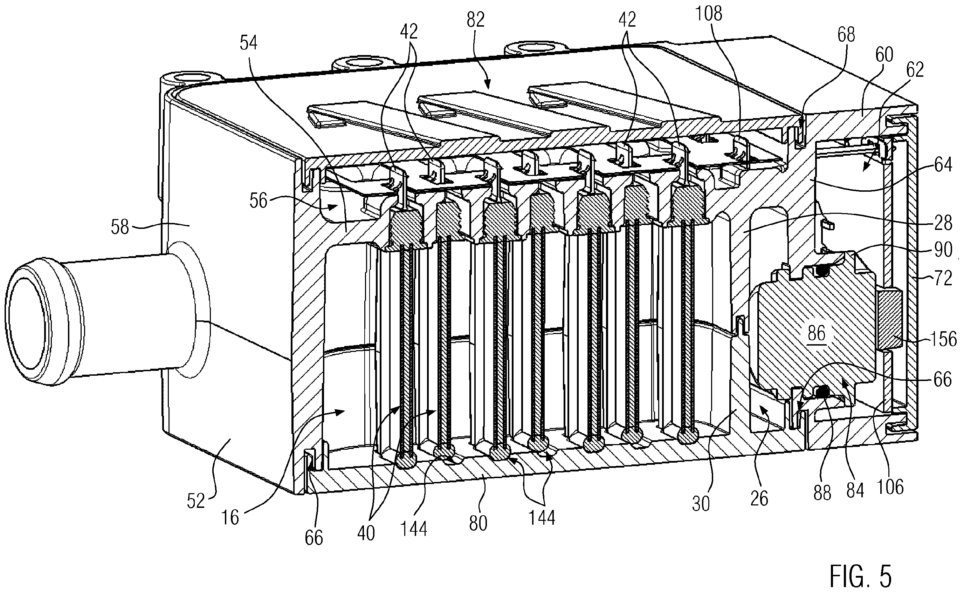

Figur 1 zeigt eine perspektivische Draufsicht auf ein mit Bezugszeichen 2 gekennzeichnetes Gehäuse einer als Wasserheizer ausgebildeten elektrischen Heizvorrichtung. Das Gehäuse 2 hat ein Gehäusewannenelement 4 aus Kunststoff. Dieser Kunststoff ist vorliegend ein Duroplast. Das Gehäuse 2 bildet einen Einlassstutzen 6 und einen Auslassstutzen 8 aus, die vorliegend einteilig an dem Gehäusewannenelement 4 ausgebildet sind. Die Stutzen 6, 8 sind als Schlauchanschlussstutzen ausgebildet und bilden eine Einlassöffnung 10 bzw. eine Auslassöffnung 12 zu einer mit Bezugszeichen 14 gekennzeichneten Zirkulationskammer aus. Die Zirkulationskammer 14 ist in zwei Heizkammern geteilt, von denen in den Figuren 1 und 2 lediglich die in der Darstellung vordere Heizkammer 16 zu erkennen ist. Die Unterteilung der Zirkulationskammer 14 erfolgt durch eine einteilig an dem Gehäusewannenelement 4 ausgebildete und von dessen Boden 18 nach innen abragende Teilungswand 20, die durch eine an einer mit Bezugszeichen 22 gekennzeichneten Abdeckplatte ausgebildete und mit Bezugszeichen 24 gekennzeichnete weitere Teilungswand 24 ihre Fortsetzung findet. An der den beiden Stutzen 6, 8 gegenüberliegenden Seite sind die beiden Heizkammern 16 durch einen Verbindungskanal miteinander verbunden, der in dem zweiten Ausführungsbeispiel eines Gehäuses 2 gemäß Figur 5 zu erkennen und dort mit Bezugszeichen 26 gekennzeichnet ist. Dieser Verbindungskanal 26 wird durch ein Kanalwandsegment 28, welches einteilig an der Abdeckplatte 22 angeformt ist und sich rechtwinklig zu der Teilungswand 20 erstreckt, und ein Kanalwandsegment 30, welches von dem Boden 18 des Gehäusewannenelementes 4 abragt, von der Heizkammer 16 getrennt.

Die Abdeckplatte 22 ist aus Kunststoff hergestellt. Vorliegend ist die Abdeckplatte 22 aus einem Duroplasten gebildet. Grundsätzlich hat die Verwendung von Duroplasten zur Herstellung des Gehäuses 2 oder Teile davon den Vorteil, dass ein Duroplast eine relativ hohe Temperaturbeständigkeit von etwa 150°C hat und auch bei Temperaturen von -40 °C keine Sprödigkeit zeigt. Damit ergibt sich für ein aus einem Duroplasten ganz oder teilweise gebildeten Gehäuse eine bessere Temperaturbeständigkeit bei Anforderungen, die im Heizbetrieb und beim Betrieb von Fahrzeugen in arktischen Regionen auftreten. Der Duroplast ist aber auch zu bevorzugen gegenüber einem Thermoplasten, da ein Duroplast eine bessere Kriechstrom-Festigkeit als ein Thermoplast hat.

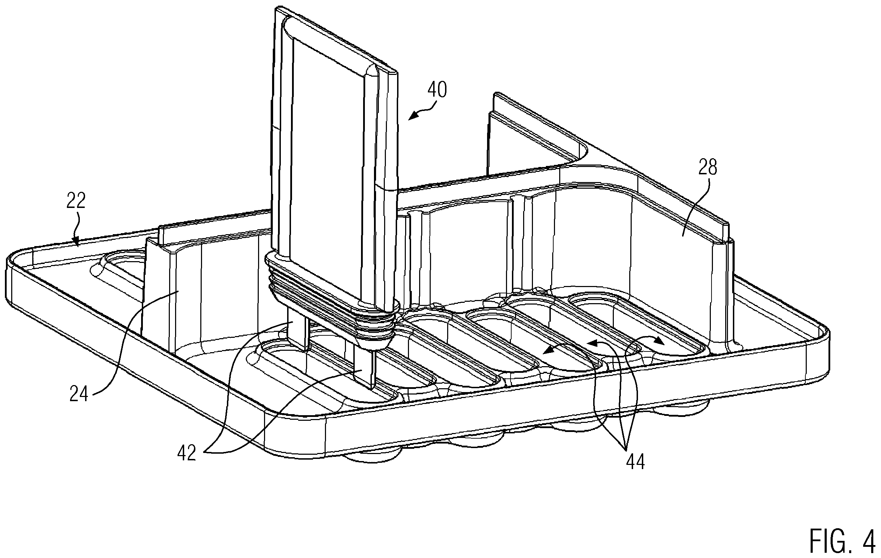

Die Figur 4 zeigt die Abdeckplatte 22 ohne das Gehäusewannenelement 4. Die Abdeckplatte 22 hat einen umlaufenden Rand 32, der mit einer an dem Gehäusewannenelement 4 ausgebildeten umlaufenden Nut 34 zusammenwirkt. Diese Nut 34 ist mit Kleber, vorliegend Epoxidkleber gefüllt, bevor der Rand 32 in die Nut 34 eindringt, um das Abdeckelement 22 mit dem Gehäusewannenelement zu verkleben. In gleicher Weise werden die Segmente 24 bzw. 28 mit den korrespondierenden Wandelementen 20 bzw. 30 des Gehäusewannenelementes 4 gefügt. Danach ist die Zirkulationskammer 14 fluiddicht zwischen dem Boden 18 des Gehäusewannenelementes 4 und dem Abdeckelement 22 und umfänglich umgeben von Wandungen eingeschlossen, die durch das Gehäusewannenelement 4 gebildet sind und die sich rechtwinklig zu dessen Boden 18 erstrecken.

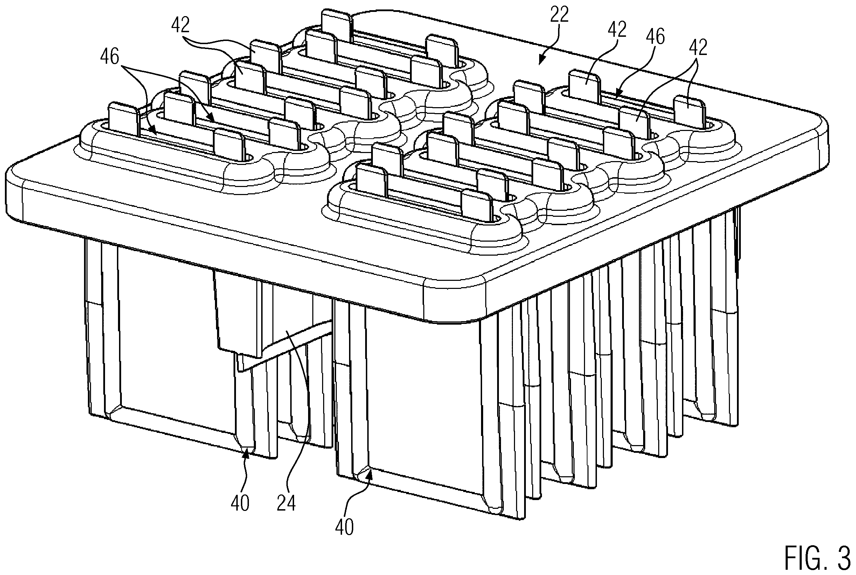

Vor der Montage wird das Abdeckelement 22 in der aus den Figuren 3 und 4 ersichtlichen Weise mit PTC-Heizelementen 40 bestückt. Die PTC-Heizelemente 40 sind dazu anschlussseitig, d.h. dort, wo die PTC-Heizelemente 40 jeweils zwei Kontaktzungen 42 aufweisen, in weibliche Steckelementaufnahmen 44 eingesteckt, die durch die Abdeckplatte 22 einteilig ausgebildet werden. Diese Steckelementaufnahmen 44 sind jeweils endseitig mit einem Längsschlitz 46 versehen, der von den Kontaktzungen 42 durchragt wird (vgl. Figuren 1, 3). Ein Längsschlitz 46 bildet ein Beispiel einer in der Abdeckplatte 22 als Beispiel einer Innenwand ausgesparten Durchtrittsöffnung aus.

Die Figur 4 verdeutlicht das Einstecken des PTC-Heizelementes 40 in die weibliche Steckelementaufnahme 44. Das PTC-Heizelement 40 hat für die beim Einstecken gefügte Steckverbindung einen Dichtkragen 48, der an die Abmessung der Steckelementaufnahme 44 angepasst ausgebildet ist und durch ein Elastomermaterial gebildet ist, welches innerhalb der Steckelementaufnahme 44 dichtend verpresst wird, so dass die Schlitze 46 gegenüber der Zirkulationskammer 14 fluiddicht abgedichtet sind. Darüber hinaus wird durch das Verpressen des den Dichtkragen 48 bildenden Materials das PTC-Heizelement 40 reibschlüssig innerhalb der Steckelementaufnahme 44 gehalten, und zwar auch in Steckrichtung, die der Längserstreckungsrichtung der Kontaktzungen 42 entspricht. In dieser Weise gefügt halten die PTC-Heizelemente 40 an der Abdeckplatte 22, auch wenn diese mit den Steckelementaufnahmen 44 nach unten ausgerichtet ist, wie dies in Figur 3 dargestellt wird.

### 2. Gehäusebasisteil

Die Figur 5 verdeutlicht in einer Schnittansicht das Wesen eines Ausführungsbeispiels eines Gehäusebasisteils, welches mit Bezugszeichen 50 gekennzeichnet ist. Das Gehäusebasisteil 50 bildet mit Bezugszeichen 52 gekennzeichnete Wandungen, die die Zirkulationskammer 16 umfänglich umgeben, d.h. die Heizkammern 16 und den Verbindungskanal 26 umfänglich umgeben. Die bei dem vorher beschriebenen Ausführungsbeispiel als separates Bauteil vorgesehene Abdeckplatte 22 ist vorliegend einteilig durch das Gehäusebasisteil 50 ausgebildet und bildet auch hier - wie bei dem ersten Ausführungsbeispiel - eine Trennwand 54 aus, die die Zirkulationskammer 16 von einer Anschlusskammer 56 trennt, in welcher vorliegend sämtliche Kontaktzungen 42 sämtlicher PTC-Heizelemente 40 freiliegen. Auch mit Bezugszeichen 58 gekennzeichnete und die Anschlusskammer umfänglich umgebende Wandungen werden durch das Gehäusebasisteil 50 ausgebildet. Schließlich werden in Verlängerung der Stutzen 6, 8 und in dieser Richtung hinter der Zirkulationskammer 16 bzw. der Anschlusskammer 56 durch das Gehäusebasisteil 50 Wandungen 60 gebildet, die eine Steuerkammer 62 umfänglich umgeben. Ein mit Bezugszeichen 64 gekennzeichneter Steuerkammerboden, von dem sich die Wandungen 60 erheben, wird teilweise durch eine der Wandungen 52 und eine der Wandungen 58 gebildet. In einer Querschnittsansicht, die parallel zu der Erstreckungsrichtung der Stutzen 6, 8 verläuft, erscheint das Gehäusebasisteil dementsprechend als im Querschnitt H-förmig mit einem einseitig an das H angesetzten U. Das Gehäusebasisteil 50 ist aus Kunststoff und als einheitliches Bauteil ausgebildet. Das Gehäusebasisteil 50 ist vorliegend aus einem Duroplasten gebildet.

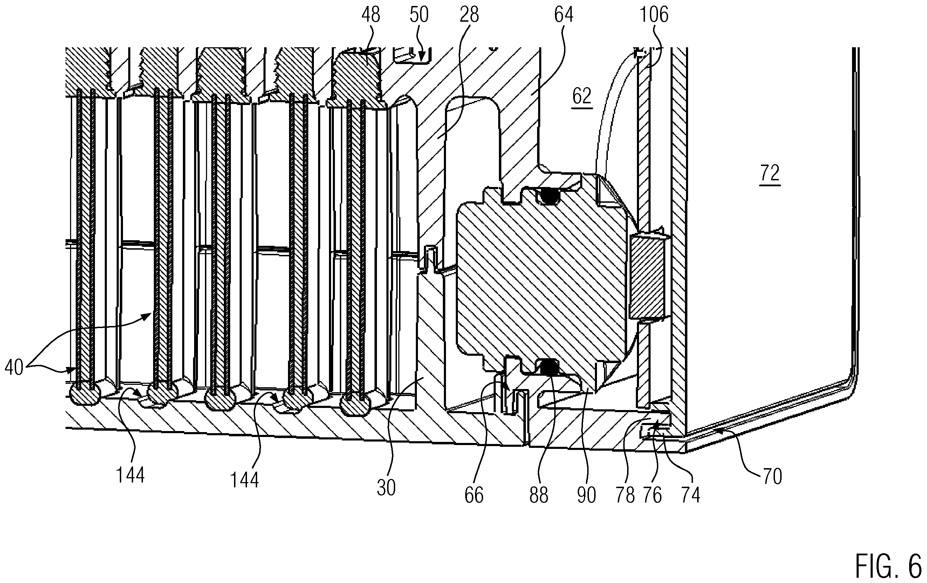

Die Wandungen 52, 58, 60 sind jeweils stirnseitig mit einer umlaufenden Nut 66, 68, 70 versehen. Die Funktion dieser Nuten 66, 68, 70 wird insbesondere durch Figur 6 verdeutlicht. So ist dort ein Abdeckelement 72 zu der Steuerkammer 62 dargestellt, welches als im Wesentlichen ebene Platte mit einem umlaufenden Kranz 74 ausgebildet ist. Dieser Kranz 74 greift in die zugehörige Nut 70 ein und verdrängt dort eingebrachten Kleber (vorliegend Epoxidkleber). Der Kranz 74 bildet einen äußeren Rand einer Gegennut 76, die an dem Abdeckelement 72 ausgeformt und innenseitig durch einen inneren Steg 78 begrenzt ist. Somit ist eine Art Labyrinthdichtung gebildet, in welche verdrängter Kleber eindringen kann, der vor der Montage des Abdeckelementens 72 entweder in die Nut 70 oder die Gegennut 76 eingebracht worden ist. In entsprechender Weise sind die Gehäusedeckel 80 zu der Zirkulationskammer 14 bzw. 82 zu der Anschlusskammer 56 randseitig ausgebildet und an dem Gehäusebasisteil 50 befestigt und dagegen abgedichtet.

Wie ebenfalls Figur 6 verdeutlicht, ist der Steuerkammerboden 64 mit einer Durchgangsöffnung 84 versehen, in die ein Kühlkörper 86 eingebracht ist. Zur Abdichtung der Zirkulationskammer 14 gegenüber der Steuerkammer 62 ist zwischen dem Kühlkörper 86 und der Innenumfangswandung der Durchgangsöffnung 84 ein Dichtring 88 vorgesehen. Der Kühlkörper 86 bildet steuergehäuseseitig einen ringförmigen Anschlag 90 aus, der gegen die stirnseitige Endfläche der Durchgangsöffnung 84 anliegt, die in Richtung auf die Steuerkammer 62 als vorspringender Kragen 92 verlängert und durch das Material des Gehäusebasisteils 50 ausgebildet ist.

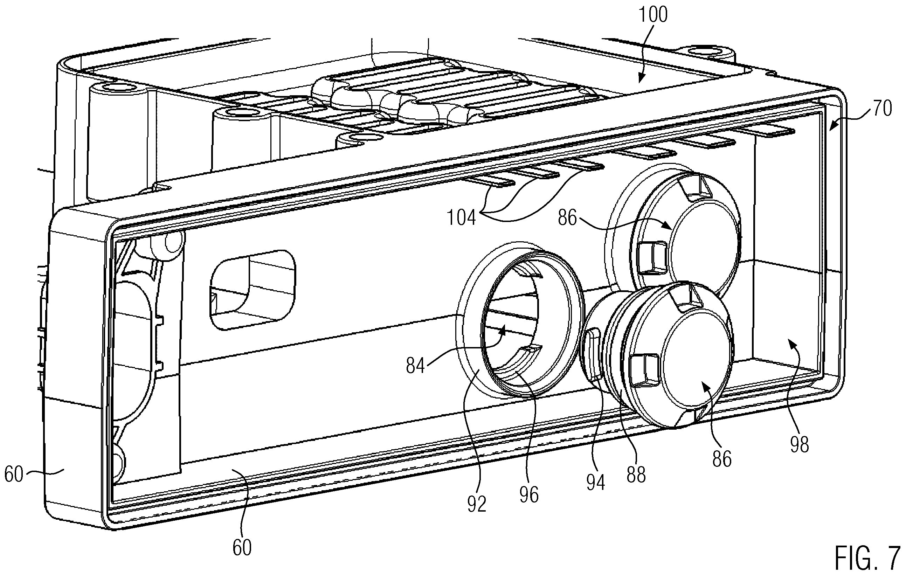

Wie Figur 7 erkennen lässt, wird die zumindest in Richtung auf die Zirkulationskammer 14 im Wesentlichen zylindrisch ausgebildete Außenumfangsfläche des Kühlkörpers 86 an gegenüberliegenden Seiten umfänglich von Verriegelungsvorsprüngen 94 überragt, die mit Verriegelungsnasen 96, die innenumfänglich die im Wesentlichen zylindrische Durchgangsöffnung 84 überragen, zusammenwirken, um einen Bajonettverschluss auszubilden, durch den der Kühlkörper 86 gegenüber dem Gehäusebasisteil 50 festgelegt ist. Der Dichtring 88 kann so ausgebildet sein, dass er diese Verriegelung unter axialer und/oder radialer Vorspannung hält. Zusätzlich kann der Steuerkammerboden 64 benachbart zu der Mündung in die Durchgangsöffnung 84 auf Seiten der Zirkulationskammer 14 mit Mulden versehen sein, in welche die Verriegelungsvorsprünge 94 eingreifen und die den Kühlkörper 86 formschlüssig drehgesichert halten, um ein unbeabsichtigtes Lösen des Bajonettverschlusses 94, 96 zu verhindern.

Die Figur 7 gibt den Blick in eine durch den Steuerkammerboden 64 und die Wandungen 60 gebildete Steuergehäusewanne frei, die im endmontierten Zustand durch das Abdeckelement 72 verschlossen ist.

Die Figur 5 zeigt oberhalb der Trennwand 54 eine durch die Trennwand 54 und die Wandungen 58 gebildete Anschlusswanne 100. Auf der in der Darstellung nach Figur 5 darunterliegenden Seite ist durch das Gehäusebasisteil 50 eine durch die Trennwand 54 und die Wandungen 52 gebildete Zirkulationswanne 102 ausgeformt. So bildet das Gehäusebasisteil 50 im Wesentlichen sämtliche Kammern 14, 56, 52, die lediglich durch die Abdeckelemente 72, 80, 82 abgedeckt werden müssen, um eine funktionsfähige und als Leichtbauteil aus Kunststoff ausgeformte elektrische Heizvorrichtung zu schaffen.

### 3. Dichtend umspritzte Stromschiene

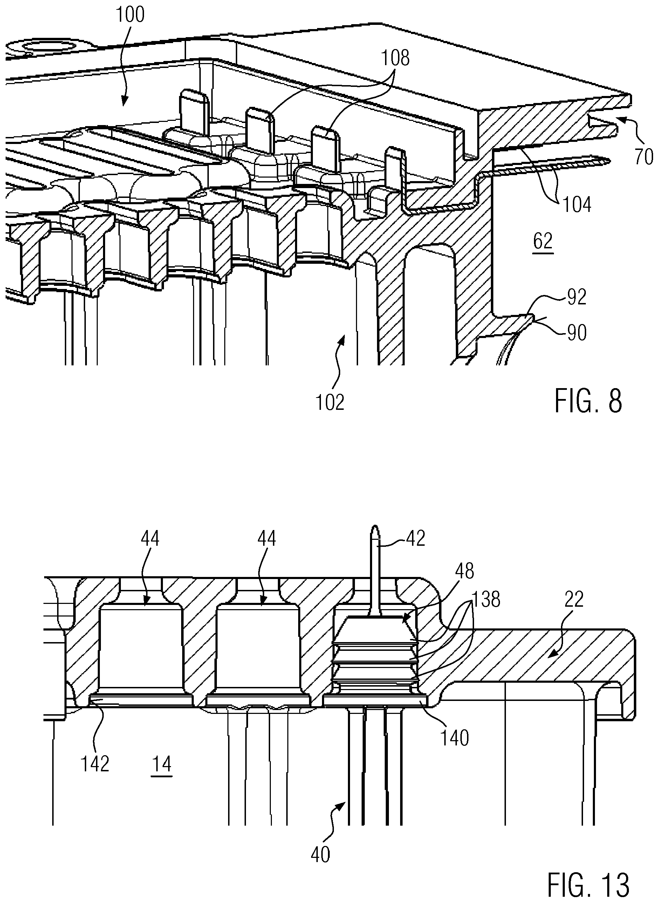

Die Figur 8 verdeutlicht eine Stromschiene 104, die als elektrische Leitungsbahn zwischen der Anschlusskammer 56 und der Steuerkammer 62 vorgesehen ist. Auf Höhe des Steuerkammerbodens 64 und innerhalb desselben ist die Stromschiene 104 zweifach gegenläufig um 90° umbogen. Ein innerhalb der Steuerkammer 62 befindliches Ende der Stromschiene 104 ist als Steckanschuss für eine innerhalb der Steuerkammer vorgesehene bestückte Leiterplatte 106 ausgebildet (vgl. Figur 6). Das andere Ende ist innerhalb der Anschlusskammer als Anschlusszunge 108 für eine innerhalb der Anschlusskammer vorgesehene und in den vorherigen Figuren weggelassene Verteilerplatte vorgesehen. Die Verteilerplatte kann gemäß EP 2 505 931 A1 ausgebildet sein. Durch mehrere hintereinander in identischer Weise vorgesehene Stromschienen 104 liegen mehrere Anschlusszungen 108 innerhalb der Anschlusskammer 56 frei. Die Anschlusszungen 108 erstrecken sich parallel zu den Kontaktzungen 42 zu den PTC-Heizelementen. So kann die Verteilerplatte zur Kontaktierung mit sämtlichen Kontakt- bzw. Anschlusszungen 42, 108 in die Anschlusskammer von oben eingesenkt werden.

### 4. Abschirmung

Die Blechstreifen 128 sind aus stanzbearbeiteten Blechen gebildet und stellen Ausführungsbeispiele für Kontaktbleche dar.

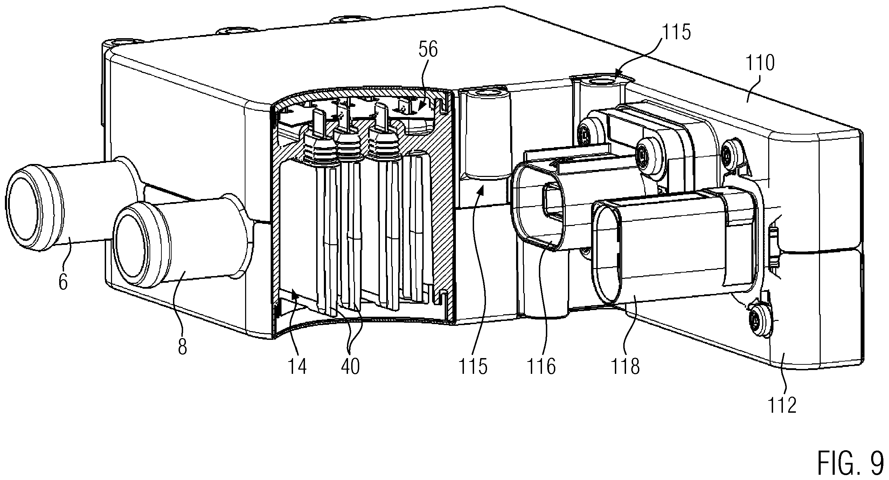

Die Figur 9 zeigt eine teilweise geschnittene Darstellung des zuvor beschriebenen Gehäuses 2. Dieses Kunststoffgehäuse 2 wird durch zwei Metallschalen 110, 112 umgeben, die eine Abschirmung der elektrischen Heizvorrichtung ausbilden, so dass elektromagnetische Strahlen nicht von dieser abgesetzt werden können. Die Teilungsebene der Metallschalen 110, 112 befindet sich in etwa auf mittlerer Höhe der beiden Stutzen 6, 8. Die Metallschalen 110, 112 umgeben das Gehäuse 2 im Wesentlichen vollumfänglich. Lediglich an dem Kunststoffgehäuse 2 ausgebildete Befestigungsvorsprünge 114 ragen durch an den Metallschalen 110, 112 ausgebildete Ausnehmungen 115 über die Metallschalen 110, 112 und die dadurch gebildete Abschirmung nach außen vor. Des Weiteren überragen mit Bezugszeichen 116 bzw. 118 gekennzeichnete Steckergehäuse, wobei das Steckergehäuse 116 für den vorliegend hochvoltigen Leistungsstrom und das Steckergehäuse 118 für die mit niedriger Voltage betriebenen Steuerleitungen vorgesehen ist. Die in Figur 9 gezeigte Ausführung erlaubt die Befestigung des Gehäuses 2 über die aus Kunststoff gebildeten Befestigungselemente 110. Mit diesem kann auf einfache Weise dem Erfordernis entsprochen werden, das Gehäuse 2 an der gewünschten Stelle innerhalb eines Kraftfahrzeuges zu befestigen. In Figur 9 sind die Metallschalen 110, 112 im Wesentlichen durchgehend ausgebildet. Sie können ebenso gut aus einem Lochblech gebildet sein, ohne dass die Wirkung der Metallschalen 110, 112 als EMV-Schutz verlorenginge.

### 5. PTC-Heizelement als Rahmenelement

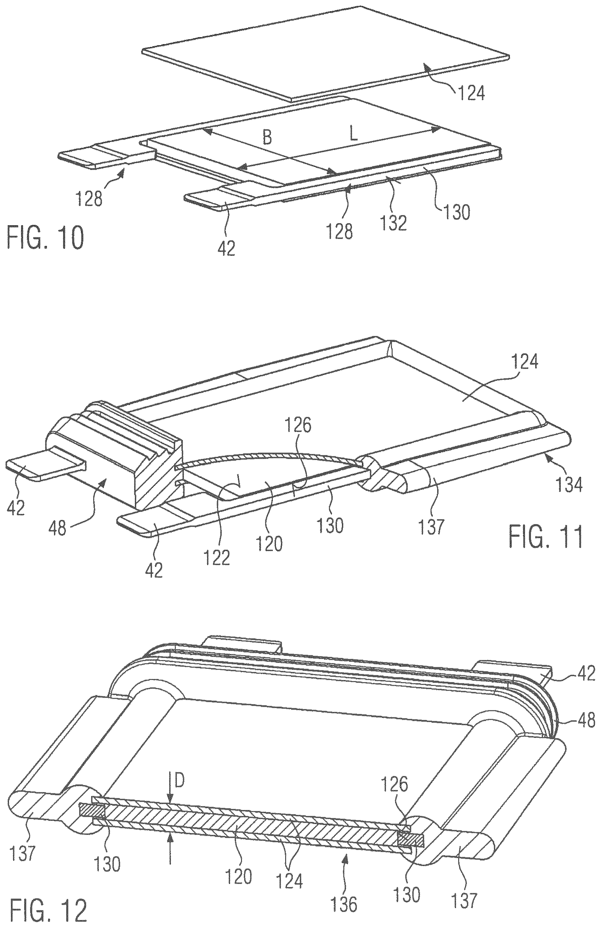

In Figur 10 ist ein PTC-Element 120 gezeigt, welches an seinen aneinander gegenüberliegenden Hauptseitenflächen 122 mit einer Isolierlage 124 belegt ist. Die Isolierlage 124 ist vorliegend eine Keramikplatte aus Aluminiumoxid. Sie kann aber auch als Beschichtung auf das PTC-Element 120 aufgebracht sein oder als Kombination einer Beschichtung mit einer ein- bzw. mehrschichtigen Isolierschicht verwirklicht sein. Das PTC-Element 120 ist als Plättchen ausgebildet mit einer Breite B bzw. einer Länge L, die um den Faktor von zumindest 10 größer sind, als die Dicke D, die dem Abstand der beiden Hauptseitenflächen 122 entspricht. Sich im Wesentlichen in Richtung der Länge L erstreckend sind an sich gegenüberliegenden Stirnseitenflächen 126 jeweils Blechstreifen 128 vorgesehen, die mit dem PTC-Element 120 verklebt und elektrisch leitend an einer oberflächigen Metallierung des PTC-Elements 128, die als Schutz mittels PVD oder CVD aufgebracht sein kann, angebunden sind. Diese Blechstreifen bilden jeweils Leiterbahnen zu unterschiedlichen Polaritäten aus, mit denen das PTC-Element 120 bestromt wird. Die Blechstreifen 12 bestehen aus einem Kontaktsteg 130, der relativ schmal ist, und der gegenüber dem Kontaktsteg 130 in Richtung der Breite B verbreiterten Kontaktzunge 42.

Die Kontaktstege 130 bilden vorliegend die Elektroden zu dem PTC-Element aus und sind mit der Metallisierung des PTC-Elements 120 elektrisch verbunden. Die Dicke der Kontaktzunge 42 ist geringer als die Dicke des Kontaktsteges 30. Dessen Dicke ist wiederum geringer als die Dicke D des PTC-Elementes. Der Blechstreifen 128 ist so vorgesehen, dass dieser an keiner Stelle die Hauptseitenflächen 122 des PTC-Elementes 120 überragt. Wie die Figuren 11 und insbesondere 12 erkennen lassen, ragen die Isolierlagen 124 seitlich über das PTC-Element 120 hinaus. Die Isolierlagen 124 haben demensprechend eine Grundfläche, die größer als die Grundfläche der Hauptseitenflächen 122 des PTC-Elementes 120 ist. Dementsprechend nehmen die äußeren Ränder der Isolierlagen 124 beidseitig den Kontaktsteg 130 zwischen sich auf (vgl. Figur 12). Jeder Kontaktsteg 130 ist mit einer der gegenüberliegenden Stirnseitenflächen 126 verklebt. Die Isolierlage 124 ist ebenfalls mit dem PTC-Element 120 verklebt. Die Isolierlage 124 liegt unmittelbar auf dem PTC-Element auf. So kontaktiert eine der Isolierlagen 124 die zugehörige Hauptseitenfläche 122 des PTC-Elementes unmittelbar.

Die Außenseite der jeweiligen Blechstreifen 128 ist vollkommen eben und erstreckt sich streng in Richtung der Länge L. Die Kontaktzungen 42 sind in Breitenrichtung größer als der Kontaktsteg 130 ausgebildet und überragen das PTC-Element 120 aufeinander zu (vgl. Figur 10). Die Kontaktzunge 42 ist auch dünner als der Kontaktsteg 130.

Der gegenüber dem Kontaktsteg 130 verbreiterte Bereich des Blechstreifens 128 ist in einem Heizelementgehäuse 134 aufgenommen, welches rahmenförmig das PTC-Element 120 umgibt. Dieser Kunststoffrahmen 134 schließt die umlaufenden Ränder der Isolierlagen 124 ein. Auch die Randflächen 132 sind von dem den Kunststoffrahmen 134 bildenden Material eingesiegelt. Der Kunststoffrahmen 134 ist durch Umspritzen eines Elastomermaterials als elastomerer Kunststoffrahmen 134 ausgebildet. Bei dem fertigen PTC-Heizelement 40 überragen lediglich die Kontaktzungen 42 an einer Stirnseite den Kunststoffrahmen 134. Alle anderen funktionalen und für die Wärmeerzeugung und Stromführung dienenden Teile des PTC-Heizelementes 40 sind innerhalb des Kunststoffrahmens 134 aufgenommen. Wie insbesondere Figur 12 verdeutlicht, liegt das PTC-Element 120 mit seinen gegenüberliegenden Hauptseitenflächen 122 hinter mit Bezugszeichen 136 gekennzeichneten und durch den Kunststoffrahmen 134 gebildeten Rahmenöffnungen. Diese Rahmenöffnungen 136 werden bedeckt durch die Isolierlage 124. Vorliegend ergibt sich nahezu überhaupt keine Überdeckung des Kunststoffrahmens 134 mit den Hauptseitenflächen 122 des PTC-Elementes, so dass dieses zu annähernd 100% seiner Hauptseitenflächen 122 hinter den Rahmenöffnungen 136 freiliegt.

Die rechtwinklig von dem Dichtkragen 48 abragenden Rahmenholme des Kunststoffrahmens 134 sind jeweils mit randseitigen Anlagenstegen 137 versehen. Die Anlagestege 137 sind nach Art von verjüngten Lamellen ausgebildet, die eine gegenüber der Dicke des Kunststoffrahmens 134 verjüngte Dicke haben. Wie sich beispielsweise auf Figur 6 entnehmen lässt, sind die PTC-Heizelement 40 jeweils hintereinander leicht versetzt vorgesehen, so dass jedes erste PTC-Heizelement 40 an der linken Seite an einer Wandung des Gehäuses 2 anliegt und dort über den dichtend gegen eine Begrenzungswand der Zirkulationskammer 14 anliegenden Anlagesteg 137 abgedichtet sind. So kann auf dieser Seite kein Fluid an dem PTC-Element 40 vorbeiströmen, wohl aber an dem in Strömungsrichtung davor bzw. dahinter liegenden PTC-Heizelement. Dieses wiederum liegt mit seinem Anlagesteg 137 an der gegenüber liegenden Seite an der die Zirkulationskammer 14 begrenzten Wandung an und verlegt dort den Strömungskanal. So wird durch alternierendes Anordnen der PTC-Heizelemente 40 ein mäandrierender Strömungskanal ausgebildet.

### 6. Steckverbindung

Der Kunststoffrahmen 134 bildet ferner den zuvor bereits beschriebenen Dichtkragen 48 aus, der mit zu dem freien Ende der Kontaktzungen 42 konisch zulaufenden Segmenten 138 versehen ist (vgl. Figur 13). Vorliegend sind drei dieser Segmente 138 in Längserstreckungsrichtung der Kontaktzunge 42 hintereinander vorgesehen. Zwischen der Rahmenöffnung 136 und diesen Segmenten 138 ist ein ringförmiger Anschlag 140 durch das Heizelementgehäuse 134 ausgebildet. Wie Figur 13 verdeutlicht, liegt dieser Anschlag dichtend gegen eine zylindrische und durch die weibliche Steckelementaufnahme 44 gebildete Gegenfläche 142 an.

Wie die Figuren 2 und 5 verdeutlichen, liegt die gegenüberliegende Seite der PTC-Elemente 40 nach dem Einbau an dem Boden 18 des Gehäuses 2 an. Zur genauen Positionierung sind in dem Boden 18 Vertiefungen 144 vorgesehen, in welchen die Stirnseitenflächen des Heizelementgehäuses 134 aufgenommen sind. Dadurch wird eine exakt rechtwinklige Positionierung der PTC-Heizelemente 40 relativ zu der Trennwand 54 gewährleistet. Des Weiteren wird eine Haltekraft erzeugt, die verhindert, dass die in der Trennwand 54 steckverbundenen PTC-Heizelemente 40 beim Betrieb und insbesondere aufgrund der Vibration des Fahrzeuges aus den weiblichen Steckelementaufnahmen 44 herausfallen können. Diese bodenseitige Anlage der PTC-Heizelemente 40 sichert auch die Anpresskraft innerhalb der Steckkontaktierung der PTC-Heizelemente, so dass diese sicher und auch dauerhaft die Längsschlitze 46 zu der Anschlusskammer 56 abdichten.

Es versteht sich von selbst, dass auf die Vertiefungen 144 auch verzichtet werden kann. Ähnlich zu den Anlagestegen 137 kann auch an der dem Dichtkragen 48 gegenüber liegenden Unterseite des Kunststoffrahmens 134 ein Anlagesteg 137 vorgesehen sein, der sich unter elastischer Kompression gegen den Boden 18 des Gehäuses 2 abstützt und dort abdichtet. Hierdurch wird nicht nur eine fluiddichte Abdichtung zwischen der Unterseite des PTC-Heizelementes 40 und dem Gehäuse 2 geschaffen. Vielmehr noch wird durch die Kompression des Anlagesteges auch eine Druckkraft erzeugt, welche das PTC-Heizelement 40 auch dann unverlierbar in der weiblichen Steckelementaufnahme 44 hält, wenn starke Vibrationen auf die elektrische Heizvorrichtung einwirken.

### 7. Elektrischer Anschluss der PTC-Heizelemente

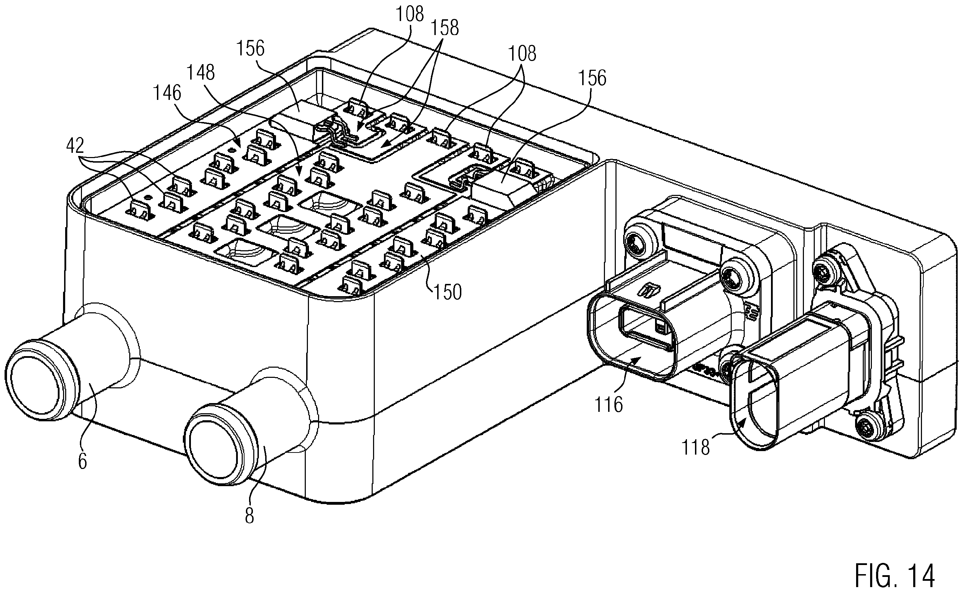

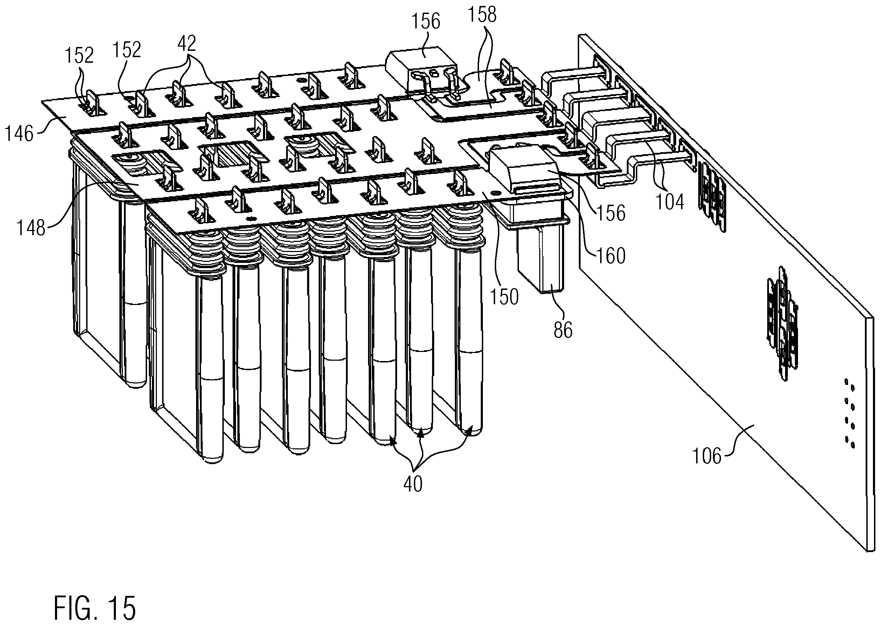

Die Figuren 14-16 verdeutlichen den elektrischen Anschluss der PTC-Heizelemente 40 am Beispiel einer weiteren Ausführungsform. Dabei zeigt Figur 15 das Ausführungsbeispiel ohne das Gehäuse 2 und Teile davon, ähnlich zu der Darstellung in Figur 3. Für den elektrischen Anschluss sind in der Anschlusskammer 56 gestanzte Bleche als Stromschienen 146, 148, 150 vorgesehen, die durch Stanzen und Biegen ausgebildete Kontaktvorsprünge 152 aufweisen, die unter elastischer Vorspannung gegen die Kontaktzungen 42 anliegen und diese kontaktieren. Die Kontaktvorsprünge 152 ragen in Aufnahmeöffnungen 154 hinein, die in den Blechstreifen der Stromschienen 146, 148, 150 ausgespart sind. Die mit Bezugszeichen 148 gekennzeichnete Stromschiene hat eine entsprechende Aufnahmeöffnung 154 mit Kontaktvorsprüngen 152 für die Stromschiene 104. Die mit Bezugszeichen 146 bzw. 148 gekennzeichneten Stromschienen sind jeweils mit einem Leistungstransistor 156 bestückt, der elektrisch leitend mit der entsprechenden Stromschiene 146, 150 verbunden und darauf montiert ist. Die Leistungstransistoren 156 sind eingangsseitig mit ebenfalls als Stromschienen ausgebildeten Zuleitern 158 verbunden, die wiederum Aufnahmeöffnungen 154 mit Kontaktvorsprüngen 152 für die Kontaktierung über jeweils eine Stromschien 104 versehen sind. Danach erfolgt die elektrische Leitung innerhalb der Einschlusskammer 56 allein durch Blechelemente. Diese Blechelemente sind ausschließlich mit den Leistungstransistoren 156 als elektrische bzw. elektronische Bauteile bestückt. Es sind keine weiteren elektrischen bzw. elektronischen Bauteile vorgesehen.

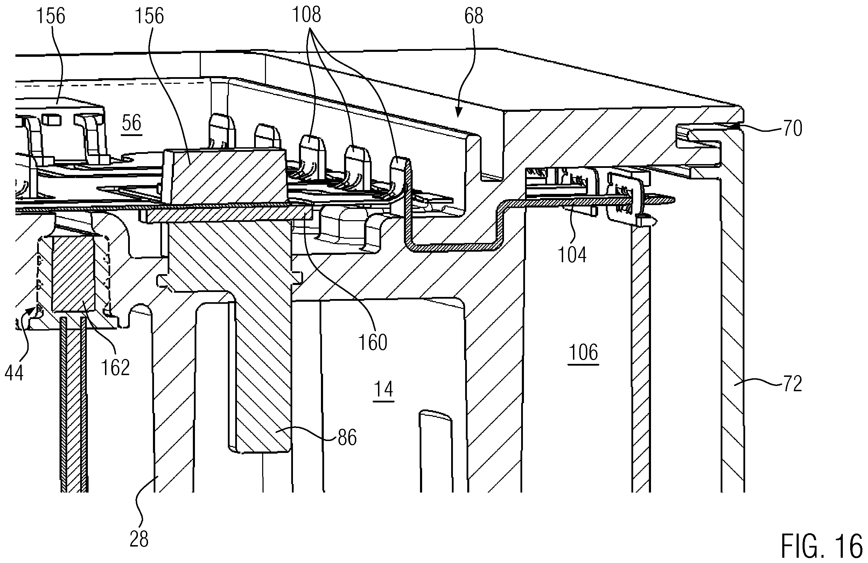

Wie insbesondere Figur 16 verdeutlicht, sind diese Metallplatten 146, 148, 150, 158 elektrisch voneinander isoliert in die Anschlusskammer 56 eingesetzt und dort positioniert. Die auf der Leiterplatte 106 verarbeiteten Steuersignale zum Ansteuern der Leistungstransistoren 146 werden über zumindest einen der Zuleiter 158 dem jeweiligen Leistungstransistor 156 zugeführt.

Die Figur 16 verdeutlicht eine Schnittansicht auf Höhe eines auch in Figur 15 mit Bezugszeichen 86 gekennzeichneten Kühlkörpers. Zwischen dem Kühlkörper 86 und dem Leistungstransistor 156 ist eine elektrische Isolierschicht 160 beispielsweise aus Kapton oder einer Keramikplatte verwirklicht. Die zwischen dieser Isolierschicht 160 und dem Leistungstransistor 156 vorgesehene Stromschiene 146, 150 führt zu einer gewissen Spreizung der von dem Leistungstransistor 156 abgegebenen Wärme. Dazu kann die Stromschiene 146 bzw. 150 zumindest im Bereich des Leistungstransistors 156 mit größerer Dicke ausgebildet sein. Ebenso gut ist es möglich, die Stromschiene 146 bzw. 150 aus Kupfer und damit einem gut wärmeleitfähigem Material auszuformen. Das Blechmaterial kann im Bereich des Leistungstransistors 156 durch Konturwalzen eine erhöhte Dicke aufweist.

Die Stromschienen 146, 148, 150, 158 können durch Stanzbearbeitung mit einer Crimplasche oder dergleichen versehen sein, die mit dem Gehäuse 2 in Wechselwirkung tritt, um die jeweilige Stromschiene 146, 148, 150, 158 an dem Gehäuse 2 befestigen und/oder den Leistungstransistor 146 unter Vorspannung gegen den Kühlkörper 86 anzulegen bzw. zu drücken.

Die Figur 16 lässt auch eine Variante des PTC-Heizelementes 40 erkennen. Danach sind die Kontaktzungen 42 innerhalb des Kunststoffrahmens 134 in einem aus einer harten Kunststoffkomponente gebildeten Befestigungsstopfen 162 aufgenommen. Die Kontaktzungen 42 sind durch Umspritzen in dem Befestigungsstopfen 162 aufgenommen. Der Befestigungsstopfen 162 besteht aus einem harten Kunststoff mit guten Kriechstrom- und Durchschlagsfestigkeit. Der Befestigungsstopfen 162 bildet einen harten Kern für das durch das PTC-Heizelement 40 gebildete männliche Steckelement. Dieser Befestigungsstopfen 162 ist lediglich durch einen dünnen Überzug aus dem weichelastischen Material des Dichtkragens 48 überzogen, wodurch die durch den Dichtkragen 48 gebildete Kompressionskraft innerhalb der weiblichen Steckelementaufnahme 44 gesteigert wird. Der Befestigungsstopfen 162 kann beispielsweise durch Umspritzen von zwei Blechstreifen 128 erfolgen, die jeweils für sich die Kontaktstege 130 und die Kontaktzungen 42 als einteiliges Bauteil ausformen. In dieser Weise vorbereitet und räumlich-körperlich relativ zueinander positioniert kann der Befestigungsstopfen 162 zusammen mit dem Blechstreifen 128 wie zuvor beschrieben mit der weichelastischen Kunststoffkomponente zur Ausbildung des Kunststoffrahmen 134 überspritzt werden.

Auch bei der Variante nach den Figuren 14-16 ist der Dichtkragen länglich ausgebildet. Es versteht sich aber von selbst, dass jede einzelne Kontaktzunge 42 in einem zylindrischen Dichtkragen mit im Grunde kreisrunder oder ovaler Querschnittsfläche angeordnet sein kann. Die weibliche Steckelementaufnahme 44 ist dann ebenfalls mit kreisrundem bzw. ovalem Querschnitt versehen. Eine solche Ausgestaltung kann die Dichtigkeit gegenüber dem konkret beschriebenen Ausführungsbeispiel erhöhen. Es versteht sich von selbst, dass auch polygonale Querschnittsflächen möglich sind.

Figur 16 lässt ferner die Befestigung des Kühlkörpers 86 innerhalb der Trennwand 54 erkennen. Der Kühlkörper 86 hat auf Höhe der Trennwand 54 an seinem Außenumfang einen den Kühlkörper 86 randseitig überragenden Befestigungskragen 164, der durch Umspritzen des die Trenne 54 bildenden Kunststoffmaterials formschlüssig eingesiegelt ist. Die Ausgestaltung des Befestigungskragens 164 verbessert im Übrigen die Dichtigkeit zwischen der Zirkulationskammer 14 und der Anschlusskammer 56.

Gemäß einer nicht dargestellten Variante kann die zu der Anschlusskammer 56 ragende Oberfläche des Kühlkörpers 86 auch von dem die Trennwand 54 ausbildenden Kunststoffmaterial überzogen sein. Beim Überspritzen des Kühlkörpers 46 kann ein dünner Film mittels Spritzgießen zwischen der Oberfläche des Kühlkörpers 86 und dem Innenraum der Anschlusskammer 56 ausgebildet sein, über welchen der Leistungstransistor 156 an dem Kühlkörper 68 elektrisch isoliert anliegt. Hierdurch wird die Fertigung weiter vereinfacht. Eine separate elektrische Isolierlage muss nicht zwischen dem Leistungstransistor 156 und dem Kühlkörper 86 vorgesehen werden.

### Bezugszeichenliste

- 2: Gehäuse
- 4: Gehäusewannenelement
- 6: Einlassstutzen
- 8: Auslassstutzen
- 10: Einlassöffnung
- 12: Auslassöffnung
- 14: Zirkulationskammer
- 16: Heizkammer
- 18: Boden
- 20: Teilungswand
- 22: Abdeckplatte
- 24: Teilungswand
- 26: Verbindungskanal
- 28: Kanalwandsegment
- 30: Kanalwandsegment
- 32: Rand
- 34: Nut
- 40: PTC-Heizelement
- 42: Kontaktzunge
- 44: weibliche Steckelementaufnahme
- 46: Längsschlitz
- 48: Dichtkragen
- 50: Gehäusebasisteil
- 52: Wandung
- 54: Trennwand
- 56: Anschlusskammer
- 58: Wandung
- 60: Wandung
- 62: Steuerkammer
- 64: Steuerkammerboden
- 66: Nut der Zirkulationskammer 14
- 68: Nut der Anschlusskammer 56
- 70: Nut der Steuerkammer 62
- 72: Abdeckelement zu der Steuerkammer 62
- 74: Kranz
- 76: Gegennut
- 78: innerer Steg
- 80: Gehäusedeckel zu der Zirkulationskammer
- 82: Gehäusedeckel zu der Anschlusskammer
- 84: Durchgangsöffnung
- 86: Kühlkörper
- 88: Dichtring
- 90: Anschlag
- 92: Kragen
- 94: Verriegelungsvorsprung
- 96: Verriegelungsnase
- 98: Steuerwanne
- 100: Anschlusswanne
- 102: Zirkulationswanne
- 104: Stromschiene
- 106: Leiterplatte
- 108: Anschlusszunge
- 110: Metallschale
- 112: Metallschale
- 114: Befestigungsvorsprung
- 115: Ausnehmung
- 116: Steckergehäuse Hochvolt
- 118: Steckergehäuse Niedrigvolt
- 120: PTC-Element
- 122: Hauptseitenfläche
- 124: Isolierlage
- 126: Stirnseitenfläche
- 128: Blechstreifen
- 130: Kontaktsteg
- 132: Randfläche
- 134: Heizelementgehäuse/Kunststoffrahmen
- 136: Rahmenöffnung
- 137: Anlagesteg
- 138: Segment
- 140: Anschlag
- 142: Gegenfläche
- 144: Vertiefung
- 146: Stromschiene
- 148: Stromschiene
- 150: Stromschiene
- 152: Kontaktvorsprung
- 154: Aufnahmeöffnung
- 156: Leistungstransistor
- 158: Zuleiter
- 160: Isolierschicht
- 162: Befestigungstopfen
- 164: Befestigungskragen
- B: Breite des PTC-Elementes
- L: Länge des PTC-Elementes
- D: Dicke des PTC-Elementes

## Patentansprüche

1. PTC-Heizelement (40) mit einem Heizelementgehäuse (134), das zumindest ein PTC-Element (120) und das PTC-Element (120) bestromende und Kontaktzungen (42) für eine elektrische Steckverbindung ausformende Kontaktbleche (128) für den elektrischen Anschluss von elektrisch mit dem PTC-Element (120) verbundenen Elektroden (130) als bauliche Einheit fügt, wobei das PTC-Element (120) an seinen beiden Hauptseitenflächen (122) mit je einer Isolationslage (124) abgedeckt ist, wobei das Heizelementgehäuse einen spritzgegossenen Kunststoffrahmen (134) aufweist, der die Isolationslagen (124) lediglich randseitig einfasst und gegenüberliegende Rahmenöffnungen (136) definiert, hinter denen das PTC-Element (120) mit seinen Hauptseitenflächen (122) liegt, und wobei die beiden Isolationslagen (124) in den gegenüberliegenden Rahmenöffnungen (136) freiliegen, **dadurch gekennzeichnet, dass** der Kunststoffrahmen (134) stoff- und/oder formschlüssig mit den Isolationslagen (124) und dem wenigstens einen PTC-Element (120) zwischen den beiden Isolationslagen (124) verbunden ist.

2. PTC-Heizelement (40) nach Anspruch 1, **dadurch gekennzeichnet, dass** die Isolationslage (124) unmittelbar an dem PTC-Element (120) anliegt oder darauf vorgesehen ist.

3. PTC-Heizelement (40) nach einem der vorherigen Ansprüche, **dadurch gekennzeichnet, dass** das PTC-Element (120) und die Isolationslagen (124) durch Umspritzen des den Kunststoffrahmen (134) bildenden Materials mit dem Kunststoffrahmen (134) verbunden sind.

4. PTC-Heizelement (40) nach einem der vorherigen Ansprüche, **dadurch gekennzeichnet, dass** das den Kunststoffrahmen (134) bildende Material ein elastomerer Kunststoff ist.

5. PTC-Heizelement (40) nach einem der vorherigen Ansprüche, **dadurch gekennzeichnet,**
**dass** die Kontaktzunge (42) durch einen Blechstreifen (128) gebildet ist, der einen stirnseitig an dem PTC-Element (120) elektrisch leitend anliegenden Kontaktsteg (130) aufweist, sodass die elektrische Versorgung des PTC-Elementes (120) hauptsächlich oder überwiegend über die Stirnseite, d.h. über einander gegenüberliegende Ränder des PTC-Elementes (120), die sich üblicherweise rechtwinklig zu der Haupterstreckungsrichtung der Isolationsplatte erstrecken, erfolgt, und
**dass** der Kunststoffrahmen (134) die Außenumfangsfläche des PTC-Heizelementes (40) ausbildet, die lediglich an einer Stirnseite durch die beiden Kontaktzungen (42) überragt ist.

6. PTC-Heizelement (40) nach einem der vorherigen Ansprüche, **dadurch gekennzeichnet, dass** der Kunststoffrahmen (134) an seiner Außenseite mit einem verjüngten Anlagesteg (137) versehen ist.

## Claims

1. A PTC heating element (40) with a heating element casing (134), which fits as a structural unit at least one PTC element (120) and contact plates (128) that energize said PTC element (120) and form contact strips (42) for an electrical plug connection in order to electrically connect electrodes (130) that are electrically connected to said PTC element (120), where said PTC element (120) is covered with an insulation layer (124) on its two main side surfaces (122), wherein said heating element casing comprises an injection-molded plastic frame (134) which encloses said insulation layers only at the edges thereof and defines oppositely disposed frame openings (136), behind which said PTC element (120) with its main side surfaces (122) is located, and wherein the two insulation layers (124) are exposed within the oppositely disposed frame openings (136), , **characterized in that** said plastic frame (134) is connected in a material-fit and/or positive-fit manner to the insulation plate (124) and the at least one PTC element (120) between the two insulation plates (124).

2. PTC heating element (40) according to claim 1, **characterized in that** said insulation layer (124) abuts directly against said PTC element (120) or is provided thereon.

3. PTC heating element (40) according to one of the preceding claims, **characterized in that** said PTC element (120) and said insulation layers (124) are connected to said plastic frame (134) by overmolding the material forming said plastic frame (134).

4. PTC heating element (40) according to one of the preceding claims, **characterized in that** said material forming said plastic frame (134) is elastomeric plastic material.

5. PTC heating element (40) according to one of the preceding claims, **characterized in that** said contact strip (42) is formed by a sheet metal strip (128) which comprises a contact ridge (130) abutting against said PTC element (120) on the face side in an electrically conductive manner such that the supply of said PTC element (120) is effected predominantly or primarily via the face side, i.e. via mutually oppositely disposed edges of the PTC element which usually extend at a right angle to the main direction of extension of the insulation plate, and that said plastic frame (134) forms the outer circumferential surface of said PTC heating element (40), is protruded only on one face side by said two contact strips (42).

6. PTC heating element (40) according to one of the preceding claims, **characterized in that** said plastic frame (134) is provided with a tapered abutment ridge (137) on its outer side.

## Revendications

1. Elément chauffant PTC (40) avec un boitier d'élément chauffant (134), qui assure l'assemblage en une unité de construction d'au moins un élément PTC (120) et de tôles de contact (128) alimentant en courant l'élément PTC (120) et formant des fiches de contact (42) pour une liaison de connexion électrique, en vue du raccordement électrique d'électrodes (130) reliées à l'élément PTC (120), élément chauffant PTC dans lequel l'élément PTC (120) est recouvert sur ses deux faces latérales principales (122) respectivement d'une couche d'isolation (124),
dans lequel le boitier d'élément chauffant comprend un cadre de matière plastique (134) moulé par injection, qui enserre les couches d'isolation (124) uniquement sur leurs bords et définit des ouvertures de cadre (136) mutuellement opposées derrière lesquelles se situe l'élément PTC (120) avec ses faces latérales principales (122),
et dans lequel les deux couches isolantes (124) sont placées librement dans les ouvertures de cadre (136) mutuellement opposées,
**caractérisé en ce que** le cadre de matière plastique (134) est relié par continuité de matière et/ou par complémentarité de formes avec les couches d'isolation (124) et ledit au moins un élément PTC (120) entre les deux couches d'isolation (124).

2. Elément chauffant PTC (40) selon la revendication 1, **caractérisé en ce que** la couche d'isolation (124) est directement appliquée sur l'élément PTC (120) ou est prévue sur celui-ci.

3. Elément chauffant PTC (40) selon l'une des revendications précédentes, **caractérisé en ce que** l'élément PTC (120) et la couche d'isolation (124) sont reliés au cadre de matière plastique (134) par surmoulage par injection avec le matériau constitutif du cadre de matière plastique (134).

4. Elément chauffant PTC (40) selon l'une des revendications précédentes, **caractérisé en ce que** le matériau formant le cadre de matière plastique (134) est une matière plastique d'élastomère.

5. Elément chauffant PTC (40) selon l'une des revendications précédentes, **caractérisé**
**en ce que** la fiche de contact (42) est formée par une bande de tôle (128), qui présente une nervure de contact (130) s'appliquant de manière électriquement conductrice sur un côté frontal de l'élément PTC (120), de sorte que l'alimentation électrique de l'élément PTC (120) s'effectue principalement ou essentiellement par l'intermédiaire du côté frontal, c'est-à-dire par l'intermédiaire de bords mutuellement opposés de l'élément PTC (120), qui s'étendent généralement perpendiculairement à la direction d'étendue principale de la plaque d'isolation, et
**en ce que** le cadre de matière plastique (134) forme la surface périphérique de l'élément chauffant PTC(40), dont font saillie uniquement sur un côté frontal, les deux fiches de contact (42).

6. Elément chauffant PTC (40) selon l'une des revendications précédentes, **caractérisé en ce que** le cadre de matière plastique (134) est pourvu sur son côté extérieur, d'une nervure d'appui rétrécie (137).
